# FASCICULE DE BREVET EUROPEEN

(11) **EP 3 097 049 B1**
(45) Date de publication et mention de la délivrance du brevet: **30.12.2020**
(21) Numéro de dépôt: 15704470.2
(22) Date de dépôt: 21.01.2015
(51) Int. Cl.: C01B 3/08, C01D 1/04

(54) **PROCEDE DE LAVAGE D'ASSEMBLAGE DE COMBUSTIBLE DE REACTEUR NUCLEAIRE UTILISANT UN PROCEDE DE TRAITEMENT DU SODIUM PAR UNE SOLUTION DE SEL AQUEUX**
VERFAHREN ZUM WASCHEN EINES BRENNELEMENTS EINES KERNREAKTORS MIT EINEM VERFAHREN ZUR BEHANDLUNG VON NATRIUM MIT EINER WÄSSRIGEN SALZLÖSUNG
METHOD FOR WASHING A FUEL ASSEMBLY OF A NUCLEAR REACTOR USING METHOD FOR TREATING SODIUM WITH AN AQUEOUS SALT SOLUTION

(30) Priorité: 22.01.2014 FR 1450520
(43) Date de publication de la demande: 30.11.2016
(73) Titulaire: Commissariat à l'Énergie Atomique et aux Énergies Alternatives, 75015 Paris (FR)
(72) Inventeur: LACROIX, Marie, F-92400 Courbevoie (FR); LORCET, Hélène, F-84120 Pertuis (FR); PERRAIS, Christophe, F-13320 Bouc-Bel-Air (FR); SIMONIN, Jean-Pierre, F-94120 Fontenay sous Bois (FR)
(74) Mandataire: Marks & Clerk France
(86) Numéro de dépôt international: PCT/EP2015/051158
(87) Numéro de publication internationale: WO 2015/110480

(56) Documents cités:
- US-A- 3 348 919
- US-A- 3 729 548
- US-A1- 2011 104 048
- LAKSHMANAN A R ET AL: "A novel method of non-violent dissolution of sodium metal in a concentrated aqueous solution of Epsom salt", JOURNAL OF SOLID STATE CHEMISTRY, ORLANDO, FL, US, vol. 177, no. 10, 1 octobre 2004 (2004-10-01), pages 3460-3468, XP004609017, ISSN: 0022-4596, DOI: 10.1016/J.JSSC.2004.05.030
- F.J. KENESHEA ET AL: "Sodium conversion experiments in the inert carrier process demonstration plant", NUCLEAR AND CHEMICAL WASTE MANAGEMENT, vol. 4, no. 2, 1 janvier 1983 (1983-01-01) , pages 189-199, XP055160371, ISSN: 0191-815X, DOI: 10.1016/0191-815X(83)90009-8

## Description

Le domaine de l'invention est celui des procédés de traitement de sodium, notamment nécessaires lors d'opérations de lavage d'un assemblage de combustible de réacteur nucléaire utilisant du sodium comme fluide caloporteur.

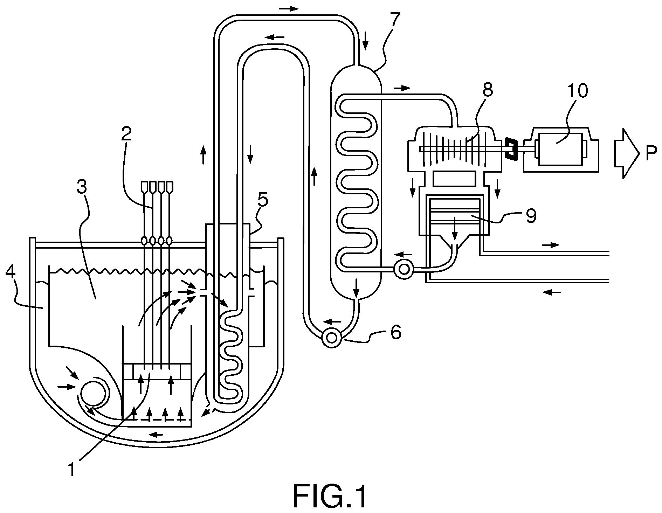

Dans le domaine du nucléaire, on peut citer le réacteur nucléaire à neutrons rapides RNR-Na refroidi au sodium liquide et utilisant un cycle fermé permettant le recyclage de l'ensemble des actinides et la régénération du plutonium. La figure 1 extraite du dossier CLEFS CEA - N°55 - ÉTÉ 2007 schématise ce type de réacteur comportant un cœur 1 comprenant le combustible, couplé à des barres de contrôle 2 (une barre de contrôle étant une « pièce mobile» de matériau neutrophage, servant à diminuer le facteur de multiplication des neutrons et permettant ainsi de contrôler des réactions en chaîne). Le réacteur comporte également un plénum chaud 3 et un plénum froid 4 représentant les chambres (ou réservoir) d'alimentation (ou d'admission) remplis respectivement de sodium primaire chaud (près du cœur 1) et de sodium primaire froid. Un échangeur de chaleur 5, une pompe sodium secondaire 6, un générateur de vapeur 7, couplés à une turbine 8, à un condensateur 9 et à un générateur 10, permettent de délivrer une puissance électrique P en sortie.

Au sein du réacteur nucléaire, le cœur correspond à la région où sont entretenues les réactions en chaîne, et comporte le combustible qui contient les matières fissiles énergétiques (noyaux lourds) ainsi que des matières fertiles qui, sous l'action des neutrons, se transformeront partiellement. Le combustible peut prendre différentes formes (pastilles, boulets, particules) et les éléments combustibles peuvent être rassemblés en crayons, en aiguilles ou en plaques, eux-mêmes réunis en assemblages.

Le procédé classique de lavage à l'eau des assemblages de combustible des réacteurs nucléaires à neutrons rapides et caloporteur sodium (RNR-Na) est basé sur la réaction (1) suivante entre le sodium et l'eau : ${Na}_{s} + {H}_{2} {O}_{l} \to {NaOH}_{s} + \frac{1}{2} {H}_{2 g} + Energie$

Cette réaction est caractérisée par la formation de soude, de dihydrogène, et une vitesse quasiment instantanée associée à une production importante d'énergie (ΔrH°_{TPN} = - 141kJ/mol_{Na}) : ces deux derniers points, peuvent conduire, dans certaines conditions, à une élévation rapide de la pression dynamique du gaz (pic de surpression), évènement redouté pour des raisons d'intégrité mécanique des structures. Cette augmentation brutale de la pression induit un risque de sûreté, pour les opérations de lavage, qui doit être maitrisé.

Il est à noter que, dans le cas spécifique des assemblages, une problématique supplémentaire est à considérer pour la sureté des opérations. Il s'agit de prendre en compte toutes les dispositions visant à conserver l'intégrité des gaines de combustible qui constituent la première barrière de confinement. En particulier, il convient, durant l'opération de lavage de refroidir et d'éviter les sollicitations mécaniques sur les gaines.

Le procédé de référence nécessite de mettre en œuvre deux voies, suivant le type d'assemblage : la voie par « aspersion », pour la majorité des assemblages, et la voie par « immersion lente », pour certains type d'assemblages.

La voie par « aspersion » met en œuvre un traitement progressif en plusieurs étapes :
- la phase de traitement à proprement parler qui est réalisée de façon maitrisée par un apport progressif d'eau sous forme de vapeur ou sous forme de fines gouttelettes. Ce brouillard d'eau est mis en suspension dans un gaz vecteur contenant du dioxyde de carbone, permettant ensuite de transformer la soude formée en carbonate de sodium. L'assemblage est refroidi en permanence par le mélange réactif gazeux qui le traverse ;
- la phase de dissolution des carbonates par immersion complète du composant à traiter. Tout le sodium ayant été traité, l'immersion de l'assemblage est réalisée rapidement à une vitesse comprise entre 60 et 1200 cm/minute ;
- la phase de rinçage final réalisée par une recirculation d'eau dans le puits de lavage. L'assemblage est refroidi en continu par l'eau.

Ce type de procédé a montré son efficacité pour traiter du sodium résiduel sous forme de films. Il nécessite d'avoir une géométrie favorable à l'écoulement du mélange gazeux réactif pour empêcher la coalescence et/ou la condensation d'eau sur les structures. En effet, ces phénomènes peuvent conduire à l'accumulation d'eau liquide qui est à proscrire pour éviter toute réaction sodium - eau violente.

Dans la centrale Superphénix, la majorité des assemblages ont été traités selon ce procédé, l'ensemble des opérations représentant une durée d'environ 7 heures.

En revanche, pour certains assemblages, possédant des organes déprimogènes (correspondant à des zones dans lesquelles est créée une perte de charge) en pied d'assemblage de type labyrinthe, en forme de vis hélicoïdale, ce procédé n'a pu être appliqué pour les raisons évoquées précédemment.

La voie par « immersion lente » a été développée spécifiquement pour ce type d'assemblages dans lesquels il peut également se former des amas de sodium : la phase de neutralisation a été supprimée et remplacée par une étape d'immersion lente dans l'eau pure. La vitesse d'immersion ne doit pas être supérieure à 2 cm/minute pour éviter toutes réactions violentes du sodium avec l'eau. L'ensemble des opérations représente une durée nettement supérieure d'environ 12 heures.

Ce type de procédé est efficace pour traiter du sodium résiduel présent sous la forme de films et d'amas de sodium. De ce fait, il est beaucoup plus flexible. En revanche, il nécessite une vitesse d'immersion faible pour éviter tout dommage sur les structures causé par une réaction sodium -eau violente. Il nécessite de bien maîtriser cette vitesse. Selon les contraintes de la centrale Superphénix, les vitesses d'immersion sont incompatibles avec le traitement d'assemblages combustibles de puissances résiduelles supérieures à environ 1 kW.

En effet, il a été calculé que les vitesses d'immersion théoriques pour limiter à 350°C l'échauffement de gaines d'assemblages dont la puissance résiduelle est comprise entre 2 à 10 kW devraient être comprises entre 5 et 50 cm/min, ce qui est incompatible avec la limite supérieure de la vitesse d'immersion définie ci-dessus à 2 cm/minute pour éviter les réactions violentes entre le sodium et l'eau.

Par conséquent, dans l'état actuel des connaissances, il est nécessaire de mettre en œuvre plusieurs procédés de lavage pour traiter le sodium résiduel de l'ensemble des assemblages d'un réacteur RNR - Na. Qui plus est, chacun des procédés présentés nécessite des durées de traitement importantes (minimum 7 ou 12 heures comme indiqué ci-dessus) US3729548 décrit un procédé pour le traitement du sodium résiduel par réaction avec de l'eau.

Au niveau industriel, il serait néanmoins intéressant d'avoir un procédé unique pour tous les types d'assemblages. De plus, les durées de traitement énoncées précédemment sont difficilement compatibles avec l'objectif d'améliorer la disponibilité du réacteur. Un procédé de lavage plus rapide permettrait de réduire la durée de l'opération de lavage et ainsi améliorer la disponibilité du réacteur.

Dans ce contexte, le Demandeur propose un procédé de traitement du sodium permettant de réaliser une opération de lavage comprenant l'immersion du sodium dans une solution comportant des constituants permettant de réduire la vitesse de réaction du sodium avec l'eau et ainsi la vitesse de libération de l'énergie de la réaction, donc la valeur du pic de surpression associé. En réduisant le phénomène d'apparition de pic de surpression, il devient alors possible d'augmenter la vitesse d'immersion et donc de traitement, notamment dans le cas des assemblages précités.

La présente invention a ainsi pour objet un procédé de lavage d'un assemblage de combustible de réacteur nucléaire comme dans la revendication 1.

Selon une variante de l'invention, ladite solution est une solution de sel d'acétate.

Selon une variante de l'invention, ladite solution est une solution de sel d'acétate de lithium, ou d'acétate de sodium, ou d'acétate de potassium.

Selon une variante de l'invention, lorsque la solution est une solution de sel d'acétate, sa concentration peut être inférieure ou égale à 3 mol/L.

Selon une variante de l'invention, la solution de sel est une solution de sel d'amino-carboxylate pouvant être une solution d"Ethylène Diamine Tétra-Acétate tétra-sodique. Il est à noter que les sels d'amino-carboxylate (EDTA) sont particulièrement intéressants dans la mesure où ils permettent d'utiliser des concentrations faibles pour obtenir un ralentissement de la cinétique de réaction Sodium Eau (RSE), pouvant typiquement être inférieures ou égales à 0,1 mol/L.

Le procédé de lavage dudit assemblage comprend les étapes suivantes :
- l'introduction dudit assemblage dans un contenant adapté pour le lavage dudit assemblage ;
- l'injection d'une solution de sel de carboxylate ou de sel d'amino-carboxylate dans ledit contenant de manière à immerger ledit assemblage dans ladite solution ;
- la mise en circulation de ladite solution dans ledit contenant, de manière à extraire l'hydrogène formé dans ledit contenant, l'hydrogène étant formé par réaction du sodium avec ladite solution.

Selon un mode privilégié, le contenant est un puits de lavage.

Le procédé de lavage dudit assemblage comprend une étape préalable de réglage en température dudit assemblage introduit dans ledit contenant, avant l'injection de ladite solution.

L'étape de réglage en température est effectuée par un balayage de gaz de refroississement pouvant être de l'azote, introduit dans ledit contenant.

Selon une variante de l'invention, le procédé de lavage dudit assemblage comprend une étape de lavage pouvant être à l'eau, dudit assemblage et dudit contenant, postérieure à l'étape de mise en circulation de ladite solution dans ledit contenant.

Selon une variante de l'invention, le procédé de lavage comprend une étape de séchage postérieure à ladite étape de lavage pouvant être à l'eau, dudit assemblage et dudit contenant.

L'invention sera mieux comprise et d'autres avantages apparaîtront à la lecture de la description qui va suivre donnée à titre non limitative et grâce aux figures annexées parmi lesquelles :
- la figure 1 schématise un réacteur nucléaire à neutrons rapides RNR-Na ;
- les figures 2a et 2b illustrent les différences de comportement en termes de pression dynamique relative en fonction du temps, lors du traitement de sodium respectivement avec une solution d'eau pure et avec une solution comportant un sel d'acétate de lithium ;
- la figure 3 illustre un dispositif permettant de réaliser les mesures de suivi de la réaction sodium-eau telles que celles représentées en figures 2a et 2b.

Selon la présente invention, le procédé de traitement du sodium par une solution contenant un certain type de sels permet de réduire la vitesse de libération de l'énergie de la réaction (1) présentée précédemment. Le Demandeur a en effet constaté que l'ajout de sel de carboxylate ou de sel d'amino-carboxylate dans l'eau permet de réduire la vitesse de réaction avec l'eau et ainsi la vitesse de libération de l'énergie de la réaction, donc la valeur du pic de surpression dynamique associé.

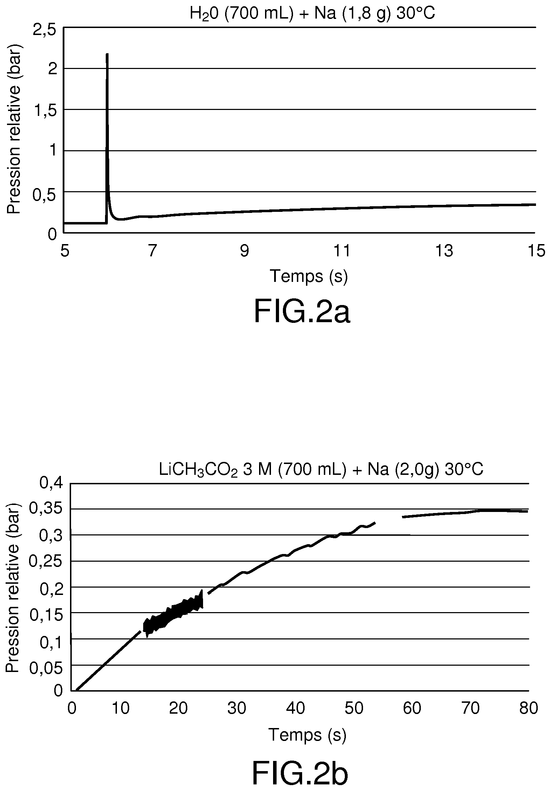

A titre d'exemple les figures 2a et 2b illustrent les différences de comportement en termes de pression dynamique relative en fonction du temps, de traitement de sodium respectivement avec une solution d'eau pure et avec une solution comportant un sel d'acétate de lithium. Plus précisément, l'évolution de la pression dynamique relative (exprimée en bar) d'une solution d'eau pure de 700mL contenant 1,8 g de sodium à 30°C dans une enceinte, a été mesurée en fonction du temps (exprimé en seconde) (figure 2a). A titre de comparaison, l'évolution de la pression dynamique relative (exprimée en bar) d'une solution d'eau comprenant un sel d'acétate de lithium de 700mL de concentration égale à 3 mol/L contenant 2 g de sodium à 30°C dans une enceinte, a également été mesurée en fonction du temps (exprimé en seconde) (figure 2b). La courbe de la figure 2b montre clairement la disparition du pic de surpression présent sur la courbe de la figure 2a. Il est ainsi démontré qu'en présence de sel à base d'acétate de lithium, à une concentration adaptée, on n'observe plus le pic de surpression, mais uniquement l'augmentation de pression statique liée à la formation du dihydrogène, soit 0,35 bar environ avec un échantillon de 2 grammes de sodium, ce type de sel influe ainsi de manière « positive » sur le ralentissement de la réaction entre le sodium et l'eau.

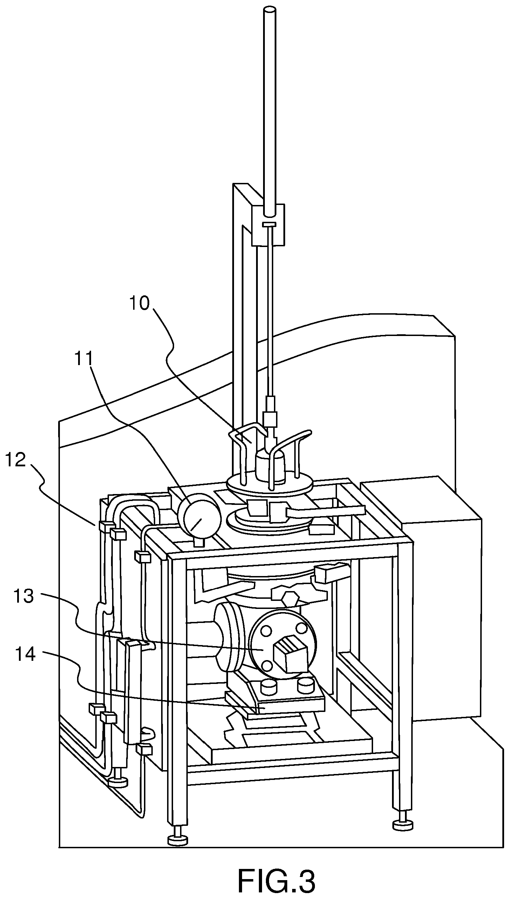

La figure 3 illustre un dispositif développé par le Demandeur permettant de suivre la Réaction Sodium-Eau (RSE) et d'effectuer les mesures de pression dynamique relative illustrées en figure 2a et 2b. Plus précisément, ce dispositif comporte un panier contenant le sodium 10 : ce panier est formé par une petite cage disposée au bout d'une tige, ce qui permet de plonger rapidement un échantillon de sodium de poids et de forme contrôlés au sein de la solution de sel aqueux et de maintenir le sodium au sein de la solution de sel aqueux. Un manomètre 11 est prévu pour procéder à des mesures de pression. La solution aqueuse comportant ou non des sels est introduite préalablement à l'essai dans un réacteur chimique 13, couplé à un agitateur magnétique 14 permettant d'assurer une bonne homogénéité de ladite solution. Il est possible de prévoir des entrée/sortie de gaz inerte 12 afin de permettre l'analyse des gaz en sortie.

Dans le cadre de réacteurs nucléaires utilisant comme fluide caloporteur le sodium, Il devient particulièrement intéressant d'exploiter le phénomène décrit précédemment pour traiter le sodium adhérent aux parois des assemblages, ou de façon plus générale des éléments autres que des assemblages mouillés par du sodium, avec des solutions aqueuses contenant les sels de la présente invention.

Plus généralement, le procédé de la présente invention permet ainsi de traiter à la fois les films et les amas de sodium pour le lavage d'éléments recouverts de sodium.

Dans ce cadre, les solutions de sels utilisées peuvent être des solutions :
- d'acétate de lithium ou de potassium ou de sodium, présentant des concentrations de préférence inférieures à 3 mol/L ;
- d'amino-carboxylate, dont l'Ethylène Diamine Tétra-Acétate tétra-sodique avec une concentration de préférence inférieure à 0,1 mol/L.

Pour le cas spécifique des assemblages de combustibles des RNR Na, le procédé de traitement de sodium selon l'invention permet ainsi d'obtenir les effets positifs suivants :
- un traitement par immersion rapide réalisé quelle que soit la géométrie de l'assemblage ;
- le traitement de tous types d'assemblages (i.e. même ceux comportant des organes déprimogènes dans les pieds d'assemblage) dont la puissance résiduelle est supérieure à 1kW voire à 10kW : en effet, la diminution de la vitesse de traitement du sodium par la mise en œuvre des sels précités permet de limiter les effets dommageables de surpression et donc d'augmenter les vitesses d'immersion. Un tel effet rend alors compatible le procédé d'immersion avec la fonction de refroidissement des assemblages comme précisé lors de la présentation du lavage par immersion lente ;
- l'augmentation des cadences de traitement d'assemblages, un seul procédé étant mis en œuvre et l'immersion est rapide.

Par voie de fait, la présente invention permet dans ce cadre de minimiser les durées de manutention et donc d'augmenter la disponibilité du réacteur, et/ou de minimiser l'investissement du réacteur en diminuant le nombre de puits nécessaires au lavage. Elle en augmente également la sécurité, puisqu'il n'est plus nécessaire de maîtriser de manière stricte une vitesse d'immersion.

L'invention est décrite plus en détails, ci-après dans le cas du lavage d'un assemblage combustible mais peut aussi bien être appliquée dans le cas de tout autre élément ayant été mouillé par du sodium que l'on cherche à éliminer.

### Exemple de procédé de lavage d'un assemblage de combustible utilisant le procédé de traitement du sodium de l'invention dans un puits de lavage comme contenant :

Selon une première étape, on procède à l'introduction de l'assemblage dans un puits de lavage, puis l'on procède à la fermeture dudit puits de lavage, avant d'effectuer un test d'étanchéité du puits.

Selon une seconde étape, on réalise un soufflage de gaz inerte (pouvant être de l'azote N₂) au travers de l'assemblage pour s'assurer que celui-ci n'est pas bouché.

Selon une troisième étape, on procède à une opération de refroidissement de l'assemblage. Pour ce faire, on procède au balayage de l'assemblage avec de l'azote afin de le refroidir par convection forcée à une température d'environ 150°C.

Selon une quatrième étape, lorsque les niveaux de température sont compatibles avec l'opération d'immersion, on procède à la mise en route de la pompe pour injecter la solution saline dans le puits de lavage. Le traitement est suivi grâce aux paramètres hygrométriques, d'hydrogène produit et à la température des effluents gazeux.

La solution saline a été préparée au préalable dans un réservoir dit de traitement dont la capacité est suffisante pour immerger en une seule fois l'assemblage. La température mise en œuvre est d'environ 20°C. Le sel choisi est dissous dans l'eau du réservoir au moyen d'un système de brassage efficace. A titre d'exemple, pour préparer un volume d'environ 0,5m³ de solution d'acétate de sodium à 3M, une masse d'environ 123 kg est introduite en continu dans le réservoir brassé.

Selon une cinquième étape, la solution saline est mise en circulation au moyen d'une pompe dédiée jusqu'à ce que le dégagement d'hydrogène soit nul.

Selon une sixième étape, on procède à une opération de vidange du puits de lavage vers un réservoir d'effluents liquides, prévu à cet effet.

Selon une septième étape, on procède à une opération de rinçage de l'assemblage et du puits de lavage. Pour réaliser cette opération, on réalise l'immersion du puits à l'eau pure avec des vitesses comprises entre 600 - 1200 cm.min⁻¹ puis on procède à une opération de recirculation. Il est à noter qu'afin de minimiser les effluents liquides générés par l'installation, l'eau de rinçage peut être utilisée pour la phase de traitement de l'assemblage suivant. L'efficacité du rinçage peut être suivie par une mesure de conductivité dans les effluents liquides.

Selon une huitième étape, on réalise la vidange du puits vers le réservoir dit de traitement.

Selon une neuvième étape, on procède à une opération de séchage du puits et au refroidissement de l'assemblage avant évacuation par balayage d'azote sec : l'opération est suivie par une mesure d'hygrométrie.

## Revendications

1. Procédé de lavage d'un assemblage de combustible de réacteur nucléaire utilisant comme fluide caloporteur du sodium, ledit procédé de lavage utilisant un procédé de traitement de sodium par immersion dans une solution de sel de carboxylate ou de sel d'amino-carboxylate, ledit procédé de lavage étant **caractérisé en ce qu'**il comprend les étapes suivantes :
- l'introduction dudit assemblage dans un contenant adapté pour le lavage dudit assemblage ;
- une étape préalable de réglage en température dudit assemblage introduit dans ledit contenant ; ladite étape de réglage en température étant effectuée par un balayage de gaz de refroidissement non réactif pouvant être de l'azote, introduit dans ledit contenant ;
- l'injection d'une solution de sel de carboxylate ou de sel d'amino-carboxylate dans ledit contenant de manière à immerger ledit assemblage dans ladite solution ;
- la mise en circulation de ladite solution dans ledit contenant, de manière à extraire l'hydrogène formé dans ledit contenant, l'hydrogène étant formé par réaction du sodium avec ladite solution.

2. Procédé de lavage selon la revendication 1, **caractérisé en ce que** ladite solution est une solution de sel d'acétate.

3. Procédé de lavage selon la revendication 2, caractérisé en ce ladite solution est une solution de sel d'acétate de lithium, ou d'acétate de sodium, ou d'acétate de potassium.

4. Procédé de lavage selon la revendication 2 ou 3, **caractérisé en ce que** la solution de sel d'acétate présente une concentration inférieure ou égale à 3 mol/L.

5. Procédé de lavage selon la revendication 1, **caractérisé en ce que** ladite solution est une solution de sel d'amino-carboxylate pouvant être une solution d'Ethylène Diamine Tétra-Acétate tétra-sodique.

6. Procédé de lavage selon la revendication 5, **caractérisé en ce que** ladite solution présente une concentration inférieure ou égale à 0,1 mol/L.

7. Procédé de lavage selon l'une des revendications 1 à 6, **caractérisé en ce qu'**il comprend une étape de lavage pouvant être à l'eau, dudit assemblage et dudit contenant, postérieure à l'étape de mise en circulation de ladite solution dans ledit contenant.

8. Procédé de lavage selon la revendication 7, **caractérisé en ce qu'**il comprend une étape de séchage postérieure à ladite étape de lavage pouvant être à l'eau, dudit assemblage et dudit contenant.

## Patentansprüche

1. Verfahren zum Waschen eines Kernreaktor-Brennelements, welcher Natrium als Kühlflüssigkeit verwendet, wobei das Waschverfahren ein Verfahren zum Behandeln von Natrium durch Eintauchen in eine Carboxylatsalz- oder Aminocarboxylatsalzlösung verwendet, wobei das Waschverfahren **dadurch gekennzeichnet ist, dass** es folgende Schritte umfasst:
- Einführen des Elements in einen zum Waschen des Elements geeigneten Behälter;
- einen vorbereitenden Schritt der Temperaturregelung des in den Behälter eingeführten Elements; wobei der Schritt der Temperaturregelung durch ein Spülen mit nicht reaktivem Kühlgas bewerkstelligt wird, welches Stickstoff sein kann, welches in den Behälter eingeleitet wird;
- Injektion einer Carboxylatsalz- oder Aminocarboxylatsalzlösung in den Behälter, um das Element in die Lösung einzutauchen;
- Umwälzung der Lösung in dem Behälter, um in dem Behälter gebildeten Wasserstoff zu extrahieren, wobei der Wasserstoff durch die Reaktion des Natriums mit der Lösung gebildet wird.

2. Waschverfahren nach Anspruch 1, **dadurch gekennzeichnet, dass** die Lösung eine Acetatsalzlösung ist.

3. Waschverfahren nach Anspruch 2, **dadurch gekennzeichnet, dass** die Lösung eine Lithiumacetat-, oder eine Natriumacetat-, oder eine Kaliumacetatsalzlösung ist.

4. Waschverfahren nach Anspruch 2 oder 3, **dadurch gekennzeichnet, dass** die Acetatsalzlösung eine Konzentration von kleiner oder gleich 3 Mol/L aufweist.

5. Waschverfahren nach Anspruch 1, **dadurch gekennzeichnet, dass** die Lösung eine Aminocarboxylatsalzlösung ist, welche eine Tetranatrium-Ethylendiamintetraacetatlösung sein kann.

6. Waschverfahren nach Anspruch 5, **dadurch gekennzeichnet, dass** die Lösung eine Konzentration von kleiner oder gleich 0,1 Mol/L aufweist.

7. Waschverfahren nach einem der Ansprüche 1 bis 6, **dadurch gekennzeichnet, dass** es einen Schritt des Waschens, welcher mit Wasser erfolgen kann, des Elements und des Behälters umfasst, , welcher nach dem Schritt der Umwälzung der Lösung in dem Behälter erfolgt.

8. Waschverfahren nach Anspruch 7, **dadurch gekennzeichnet, dass** es einen dem Schritt des Waschens, der mit Wasser erfolgen kann, folgenden Trocknungsschrittdes Elements und des Behälters umfasst.

## Claims

1. A process for washing a fuel assembly of a nuclear reactor using sodium as coolant, said washing process using a method for treating sodium by immersion in carboxylate salt or amino-carboxylate salt solution, said washing process being **characterized in that** it comprises the following steps:
- introducing said assembly into a container suitable for washing said assembly;
- a prior step of adjusting the temperature of said assembly introduced into said container; said temperature adjustment step being carried out by flushing nonreactive cooling gas, possibly nitrogen, introduced into said container;
- injecting carboxylate salt or amino-carboxylate salt solution into said container so as to immerse said assembly in said solution;
- circulating said solution in said container, so as to extract the hydrogen formed in said container, the hydrogen being formed by reaction of sodium with said solution.

2. The washing process according to claim 1, **characterized in that** said solution is an acetate salt solution.

3. The washing process according to claim 2, **characterized in that** said solution is a lithium acetate, or sodium acetate, or potassium acetate salt solution.

4. The washing process according to claim 2 or 3, **characterized in that** the acetate salt solution has a concentration of less than or equal to 3 mol/L.

5. The washing process according to claim 1, **characterized in that** said solution is an aminocarboxylate salt solution that may be a tetrasodium ethylenediaminetetraacetate solution.

6. The washing process according to claim 5, **characterized in that** said solution has a concentration of less than or equal to 0.1 mol/L.

7. The washing process according to one of claims 1 to 6, **characterized in that** it comprises a step of washing, possibly with water, said assembly and said container, after the step of circulating said solution in said container.

8. The washing process according to claim 7, **characterized in that** it comprises a step of drying after said step of washing, possibly with water, said assembly and said container.
